# EUROPÄISCHE PATENTSCHRIFT

(11) **EP 1 798 110 B1**
(45) Veröffentlichungstag und Bekanntmachung des Hinweises auf die Patenterteilung: **28.05.2008**
(21) Anmeldenummer: 06025882.9
(22) Anmeldetag: 14.12.2006
(51) Int. Cl.: B60R 7/12

(54) **Türinnenverkleidung mit Staufach zur Aufbewahrung eines Gegenstands, insbesondere eines Regenschirms**
Vehicle door trim with an item storage compartment, in particular an umbrella.
Garniture intérieure de portière avec compartiment de rangement d'un objet, en particulier un parapluie

(30) Priorität: 14.12.2005 DE 102005059728
(43) Veröffentlichungstag der Anmeldung: 20.06.2007
(73) Patentinhaber: GM Global Technology Operations, Inc., Detroit, MI 48265-3000 (US)
(72) Erfinder: Geyrhofer, Mattias, 55286 Wörrstadt (DE); Verhée, Patrick, 50858 Köln (DE)
(74) Vertreter: Strauss, Peter

(56) Entgegenhaltungen:
- WO-A2-95/27634
- JP-A- 1 317 844
- JP-A- 10 016 651
- JP-A- 2001 114 024
- JP-A- 2002 104 046
- US-A1- 2004 084 922

## Beschreibung

Die Erfindung betrifft eine Türinnenverkleidung eines Kraftfahrzeuges mit mindestens einem Staufach zur Aufbewahrung mindestens eines Gegenstands, insbesondere eines Regenschirms, wobei die Türinnenverkleidung eine Armlehne aufweist, die auf der Oberseite eine Klappe aufweist, mit der das einen Boden aufweisende Staufach verschließbar ist, wobei der Boden eine Abflussöffnung für Flüssigkeit aufweist, sowie mit dem Boden im Bereich der Abflussöffnung ein Schlauch oder ein Rohr zum Ableiten der Flüssigkeit verbunden ist.

Eine solche Türinnenverkleidung ist aus der JP 10 016651 A bekannt. Dort ist das Staufach horizontal angeordnet und es ist mit dem Boden des Staufachs ein kurzes Rohr verbunden, durch das vom nassen Regenschirm abtropfende Flüssigkeit in den Türinnenraum geleitet wird.

In der WO 95/27634 A2 ist eine Türinnenverkleidung mit Staufach zur Aufbewahrung eines Gegenstands, insbesondere eines Regenschirms beschrieben, wobei das Staufach vertikal angeordnet ist. Konkret ist in der Fahrzeugtür ein Aufnahmefach und ein mit diesem beweglich verbundener Schirmhalter zur Aufnahme eines Regenschirms vorgesehen. Tropfwasser des in den Schirmhalter eingelegten Regenschirms wird in einer im Aufnahmefach angeordneten Sammelrinne aufgefangen und einem, im Bereich der Unterseite der Fahrzeugtüre angeordneten Abflussrohr zugeführt. Dieses ist mit einem Ablassventil versehen, das beim Öffnen der Fahrzeugtüre das aufgefangene Tropfwasser freigibt, das sich dadurch ins Freie entleeren kann.

Eine weitere Türinnenverkleidung ist aus der DE 103 03 345 A1 bekannt. Dort sind Armauflagen oder Armlehnen beschrieben, die Ablagefächer beinhalten. Diese Ablagefächer sind aus dem Fahrzeuginnenraum zugänglich. Auf der Oberseite der Armlehne befindet sich eine Klappe, die sich nach oben klappen lässt und das darunter liegende Staufach frei gibt.

In dieser Schrift wird ferner vorgeschlagen, die Zugangsöffnung für das Staufach im Bereich der Querwand der Tür anzuordnen, die der Anschlagsseite der Tür abgewandt ist. Bei dieser Gestaltung ist das Staufach im Wesentlichen horizontal angeordnet und nimmt in dieser Position den Gegenstand, beispielsweise einen Regenschirm, auf. Durch diese in der Höhe kompakte Anordnung des Staufachs lässt sich diese Gestaltung bei Supersportwagen verwirklichen, die eine äußerst geringe Fahrzeughöhe aufweisen.

Aus der DE 100 62 162 A1 ist ein Staufach zur Aufbewahrung von Gegenständen, insbesondere Regenschirmen, in einem Kraftfahrzeug bekannt, das angrenzend zu einem Bodenschweller des Kraftfahrzeugs angeordnet ist. Hierdurch wird der ungenutzte Raum zwischen Schweller und Sitz einer Verwendung zugeführt. Im Staufach abgelegte Gegenstände können auch während der Fahrt leicht herausgeholt werden, da sich das Staufach in Griffweite für den auf dem Sitz sitzenden Fahrzeuginsassen befindet. Für den Fall, dass feuchte Gegenstände, wie z. B. Regenschirme, in dem Staufach untergebracht werden sollen, ist zusätzlich eine Wasserfangschale vorgesehen, die mit Löchern versehen ist und auf Stützen beanstandet auf dem Boden des Staufachs steht. In der Unterseite des Staufachs sind Ablauflöcher eingebracht. Damit kann von den Gegenständen herab tropfendes Wasser durch die Löcher der Wasserfangschale und schließlich durch die Ablauflöcher austreten, und die aufbewahrten Gegenstände liegen nicht in durch nicht ablaufendes Wasser gebildeten Wasserlachen. Auch bei dieser Gestaltung ist die Anordnung des vom Staufach aufgenommenen Gegenstandes im Wesentlichen horizontal.

In der DE 38 12 571 A1 wird vorgeschlagen, in die Tür eines Kraftfahrzeuges einen zur Horizontalen geneigt angeordneten Köcher zur Aufnahme eines Gegenstandes, insbesondere eines Regenschirms, vorzusehen. Bei dem derart schräg eingebauten Köcher kann sich das Tropfwasser in der Köcherspitze sammeln. Deshalb ist vorgesehen, die Köcherspitze mit einer Bohrung zu versehen, sodass das Wasser ablaufen kann. Alternativ wird vorgeschlagen, den Köcher aus gitterförmigem oder gelochtem Material zu gestalten, sodass das Wasser überall abtropfen kann.

Das Tropfwasser kann über Bohrungen, die sich an der Unterseite der Fahrzeugtür befinden, aus der Türe herausfließen.

Aufgabe der vorliegenden Erfindung ist es, eine Türinnenverkleidung der eingangs genannten Art so weiterzubilden, dass, bei räumlich günstiger Aufbewahrung und vorteilhafter Zugänglichkeit eines nassen Regenschirms, eine Überfeuchtung des Fahrzeuginnenraums wirksam vermieden wird.

Gelöst wird die Aufgabe bei einer Türinnenverkleidung der eingangs genannten Art dadurch, dass der Schlauch oder das Rohr dem Ableiten der Flüssigkeit aus der Tür dient sowie mehrere, insbesondere parallel zueinander angeordnete Staufächer vorgesehen sind.

Das sich beim Einlegen eines nassen Regenschirms in das Staufach in dessen Bodenbereich ansammelnde Wasser wird somit definiert durch den Schlauch oder das Rohr, aus der Tür nach außen, somit nicht in den Fahrzeuginnenraum geleitet. Auf besonders einfache Art und Weise ist das Staufach selbst als Rohr mit Boden ausgebildet. Durch die Rohrform ist das Staufach der Form eines zusammengefalteten Regenschirms angepasst. Die Längen- und Breitenabmessungen des Staufachs sind vorzugsweise auf die Längen- und Breitenabmessungen eines Taschen-Regenschirms abgestimmt. Demzufolge sind die Abmessungen des Staufachs sehr kompakt; der Regenschirm lässt sich demzufolge unkompliziert vertikal orientiert im Staufach, somit zwischen der Armlehne und der unteren Kontur der Türinnenverkleidung unterbringen.

Um dass vom Regenschirm abtropfende Wasser sicher nach außen abführen zu können, ist vorgesehen, dass der Schlauch bzw. das Rohr bis zur unteren Fläche des Türgerippes reicht.

Um einen optimalen Komfort für den Fahrzeuginsassen im Bereich der Armlehne zu gewährleisten, ist die Klappe um eine Achse schwenkbar gelagert, die im Bereich der Armlehne auf der dem Fahrzeuginsassen zugewandten Seite angeordnet ist. Befindet sich die Klappe in deren das Staufach verschließenden Stellung, bilden die obere Fläche der Klappe und die sich anschließende obere Fläche der Armlehne eine Ebene, sodass die Armlehne vom Fahrzeuginsassen als homogene Einheit wahrgenommen wird. Dadurch, dass die Schwenkachse für die Klappe auf der dem Fahrzeuginsassen zugewandten Seite angeordnet ist, kann auf dieser Seite der Übergang von der Klappe zu den anschließenden Bereichen der Armlehne quasi ohne Übergang gestaltet und im Übrigen diesem Bereich ein sehr vorteilhaftes, einheitliches Aussehen verliehen werden, beispielsweise durch Gestaltung der Klappe und des sich anschließenden Bereiches der Armlehne mit einem abgerundeten Übergang von oben nach unten. Vom Fahrzeuginsassen kann die Klappe durch eine einfache, ergonomisch günstige Bewegung geöffnet werden, indem die Klappe im Bereich der Schwenkachse der Klappe des abgewandten Endes ergriffen wird und der Fahrzeuginsasse die Klappe auf sich zuschwenkt. Der Schließvorgang der Klappe erfolgt im umgekehrten Sinne und ist gleichfalls ergonomisch günstig.

Die Staufächer sind insbesondere mittels einer gemeinsamen Klappe verschließbar. Bei einer solchen Anordnung können mehrere Gegenstände, insbesondere mehrere Regenschirme vertikal orientiert nebeneinander angeordnet werden. Jedes Staufach sollte mit einer eigenen Abflussöffnung zum Ableiten der Flüssigkeit aus der Tür versehen sein.

Die Erfindung schlägt somit eine Türinnenverkleidung eines Kraftfahrzeugs vor, die geeignet ist, einen länglichen Gegenstand, insbesondere einen nassen Regenschirm aufzunehmen. Durch diese Aufnahme für den Regenschirm wird vermieden, dass das Interior, die Sitze oder irgendwelche anderen Bauteile des Fahrzeugs, die nässeempfindlich sind, nass werden. Der Schlauch bzw. das Rohr zum Ableiten des im Staufach gesammelten Wassers wird durch die Türstruktur oder Türverkleidung geführt. Das im Staufach angesammelte Wasser wird also direkt von dem Fach bis zur unteren Fläche des Türgerippes bzw. Türrahmens geleitet. Die Gestaltung der Innenverkleidung ermöglicht es, symmetrische Bauteile zu realisieren.

Im Folgenden wird die Erfindung anhand eines bevorzugten Ausführungsbeispieles unter Bezugnahme auf die Zeichnung näher erläutert, ohne hierauf beschränkt zu sein. Es zeigt:
- Figur 1: eine räumliche Ansicht eines Ausschnitts einer Tür eines Kraftfahrzeugs, deren Türinnenverkleidung mit einem Staufach versehen ist,
- Figur 2: einen Schnitt durch den Ausschnitt der Tür und den unten angrenzenden Bereich des Bodenschwellers, wobei nur die für die Erfindung relevanten Bereiche veranschaulicht sind.

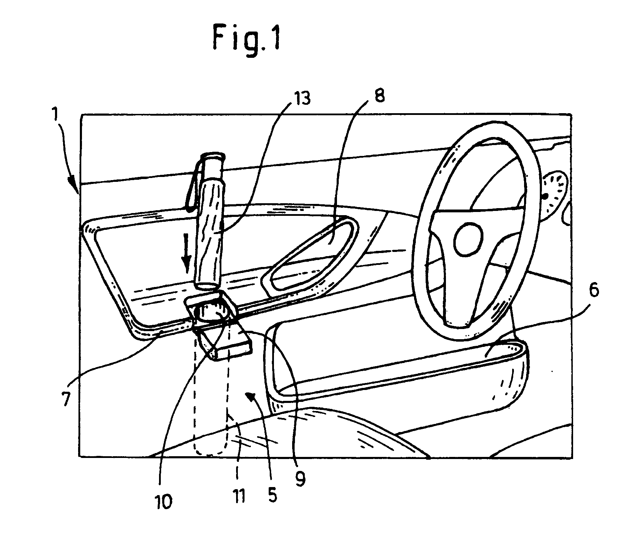

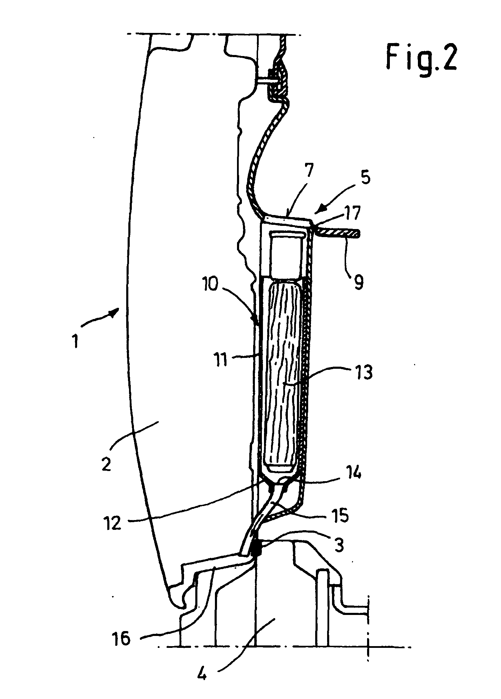

Gezeigt ist die geschlossene Tür 1, deren Türrahmen 2 an der Dichtung 3 des karosserieseitigen Bodenschwellers 4 anliegt. Der Türrahmen 2 nimmt eine Türinnenverkleidung 5 auf. Diese ist profiliert ausgebildet und weist insbesondere in ihrer unteren Hälfte ein vorderes offenes Fach 6 zur Aufnahme von Gegenständen auf, beispielsweise von Straßenkarten. Im oberen hinteren Bereich ist die Türinnenverkleidung 5 mit einer Armlehne 7 und einem Handgriff 8 versehen. Die Armlehne 7 weist auf der Oberseite eine Klappe 9 auf, mit der ein Staufach 10 verschließbar ist. Die Klappe 9 ist um eine Achse 17 schwenkbar gelagert, die im Bereich der Armlehne 7 auf der dem Fahrzeuginsassen zugewandten Seite angeordnet ist. Das Staufach 10 ist vertikal angeordnet und als Rohr 11 mit Boden 12 ausgebildet. Das Rohr weist einen kreisförmigen Querschnitt auf, wobei der Innendurchmesser des Rohres auf den Durchmesser eines zusammengefalteten TaschenRegenschirms 13 abgestimmt ist. Auch die Länge des Rohrs 11 ist auf die Länge des Taschen-Regenschirms 13 abgestimmt. Die Abstimmung bezüglich der Längen- und Breitenabmessungen erfolgt so, dass der Taschen-Regenschirm 13 unkompliziert, ohne dass für den Taschen-Regenschirm 13 zu viel Platz verbleibt, vom Staufach 10 aufgenommen und aus diesem herausgenommen werden kann. In der Figur 1 ist der Taschen-Regenschirm 13 vor dem Einstecken in das Staufach 10 veranschaulicht, wobei die Einsteckrichtung mittels eines Pfeils verdeutlicht ist. In Figur 2 ist der in das Staufach eingesteckte Taschen-Regenschirm 13 bei geöffneter Klappe 9 gezeigt.

Der Boden 12 des Staufachs 10 ist mit einer Abflussöffnung 14 für vom nassen Regenschirm 13 abtropfendes Wasser versehen. Mit dem Boden 12 ist im Bereich der Abflussöffnung 14 ein Schlauch 15 zum Ableiten des Wassers aus der Tür 1 verbunden. Der Schlauch 15 reicht bis zur unteren Fläche des Türgerippes bzw. Türrahmens 2.

### Bezugszeichenliste

- Tür: 1
- Türrahmen: 2
- Dichtung: 3
- Bodenschweller: 4
- Türinnenverkleidung: 5
- Fach: 6
- Armlehne: 7
- Handgriff: 8
- Klappe: 9
- Staufach: 10
- Rohr: 11
- Boden: 12
- Taschen-Regenschirm: 13
- Abflussbohrung: 14
- Schlauch: 15
- Fläche: 16
- Achse: 17

## Patentansprüche

1. Türinnenverkleidung (5) eines Kraftfahrzeuges, mit mindestens einem Staufach (10) zur Aufbewahrung mindestens eines Gegenstands (13), insbesondere eines Regenschirms, wobei die Türinnenverkleidung (5) eine Armlehne (7) aufweist, die auf der Oberseite eine Klappe (9) aufweist, mit der das einen Boden (12) aufweisende Staufach (10) verschließbar ist, wobei der Boden (12) eine Abflussöffnung (14) für Flüssigkeit aufweist, sowie mit dem Boden (12) im Bereich der Abflussöffnung (14) ein Schlauch (15) oder ein Rohr zum Ableiten der Flüssigkeit aus der Tür (1) verbunden ist, **dadurch gekennzeichnet, dass** das Staufach (10) vertikal angeordnet ist und der Schlauch (15) oder das Rohr dem Ableiten der Flüssigkeit aus der Tür (1) dient, sowie mehrere, insbesondere parallel zueinander angeordnete Staufächer (10) vorgesehen sind.

2. Verkleidung nach Anspruch 1, **dadurch gekennzeichnet, dass** das Staufach (10) als Rohr (11) mit Boden (12) ausgebildet ist.

3. Verkleidung nach Anspruch 1 oder 2, **dadurch gekennzeichnet, dass** die Längen- und Breitenabmessungen des Staufachs (10) auf die Längen- und Breitenabmessungen eines Taschen-Regenschirms (13) abgestimmt sind.

4. Verkleidung nach einem der Ansprüche 1 bis 3, **dadurch gekennzeichnet, dass** der Schlauch (15) oder das Rohr bis zur unteren Fläche (16) des Türgerippes (2) reicht.

5. Verkleidung nach einem der Ansprüche 1 bis 4, **dadurch gekennzeichnet, dass** die Klappe (9) um eine Achse (17) schwenkbar gelagert ist, die im Bereich der Armlehne (7) auf der dem Fahrzeuginsassen zugewandten Seite angeordnet ist.

6. Verkleidung nach einem der Ansprüche 1 bis 5, **dadurch gekennzeichnet, dass** die Staufächer (10) mittels einer gemeinsamen Klappe (9) verschließbar sind.

## Claims

1. Door interior trim (5) of a motor vehicle, having at least one stowage compartment (10) for storing at least one article (13), in particular an umbrella, wherein the door interior trim (5) comprises an armrest (7), which at the top has a flap (9), by means of which the stowage compartment (10) having a base (12) is closable, wherein the base (12) has a drain opening (14) for liquid, and there is connected to the base (12) in the region of the drain opening (14) a hose (15) or tube for draining the liquid from the door (1), **characterized in that** the stowage compartment (10) is disposed vertically and the hose (15) or tube is used to drain the liquid from the door (1), and a plurality of stowage compartments (10) are provided, which are in particular disposed parallel to one another.

2. Trim according to claim 1, **characterized in that** the stowage compartment (10) takes the form of a tube (11) having base (12).

3. Trim according to claim 1 or 2, **characterized in that** the length- and width dimensions of the stowage compartment (10) are matched to the length- and width dimensions of a compact umbrella (13).

4. Trim according to one of claims 1 to 3, **characterized in that** the hose (15) or tube extends as far as the bottom surface (16) of the door framework (2).

5. Trim according to one of claims 1 to 4, **characterized in that** the flap (9) is mounted pivotably about an axis (17) which is disposed in the region of the armrest (7) at the side facing the vehicle occupant.

6. Trim according to one of claims 1 to 5, **characterized in that** the stowage compartments (10) are closable by means of a common flap (9).

## Revendications

1. Habillage intérieur de porte (5) d'un véhicule automobile, comportant au moins un compartiment de rangement (10) destiné à recevoir au moins un objet (13), en particulier un parapluie, l'habillage intérieur de porte (5) comportant un accoudoir (7), qui comporte sur le côté supérieur un rabat (9), permettant de fermer le compartiment de rangement (10) muni d'un fond (12), ledit fond (12) comportant un orifice d'évacuation (14) pour un liquide, ainsi qu'un tuyau flexible (15) ou un tube pour évacuer le liquide hors de la porte (1) étant relié au fond (12) dans la zone de l'orifice d'évacuation (14), **caractérisé en ce que** le compartiment de rangement (10) est disposé verticalement, et le tuyau flexible (15) ou le tube sont utilisés pour évacuer le liquide hors de la porte (1), et il est prévu plusieurs compartiments de rangement (10) disposés en particulier parallèlement entre eux.

2. Habillage selon la revendication 1, **caractérisé en ce que** le compartiment de rangement (10) est réalisé sous forme de tube (11) avec un fond (12).

3. Habillage selon la revendication 1 ou 2, **caractérisé en ce que** les dimensions en longueur et en largeur du compartiment de rangement (10) sont ajustées aux dimensions en longueur et en largeur d'un parapluie de poche (13).

4. Habillage selon l'une quelconque des revendications 1 à 3, **caractérisé en ce que** le tuyau flexible (15) ou le tube s'étendent jusqu'à la surface inférieure (16) de l'ossature de la porte (2).

5. Habillage selon l'une quelconque des revendications 1 à 4, **caractérisé en ce que** le rabat (9) est monté de manière à pouvoir pivoter autour d'un axe (17), qui est disposé dans la zone de l'accoudoir (7) sur le côté orienté vers l'occupant du véhicule.

6. Habillage selon l'une quelconque des revendications 1 à 5, **caractérisé en ce que** les compartiments de rangement (10) peuvent être fermés au moyen d'un rabat (9) commun.
